# EUROPÄISCHE PATENTSCHRIFT

(11) **EP 1 260 407 B1**
(45) Veröffentlichungstag und Bekanntmachung des Hinweises auf die Patenterteilung: **11.01.2012**
(21) Anmeldenummer: 02010710.8
(22) Anmeldetag: 14.05.2002
(51) Int. Cl.: B60N 2/48, B60R 11/02

(54) **Fahrzeugsitz mit integriertem Bildschirmgerät**
Vehicle seat with integrated screen
Siège de véhicule avec écran intégré

(30) Priorität: 25.05.2001 DE 20108701 U; 28.11.2001 DE 20119410 U
(43) Veröffentlichungstag der Anmeldung: 27.11.2002
(73) Patentinhaber: Johnson Controls GmbH, 51399 Burscheid (DE)
(72) Erfinder: Boudinot, Richard, 51371 Leverkussen (DE)
(74) Vertreter: Kutzenberger, Helga

(56) Entgegenhaltungen:
- DE-A- 19 708 764
- DE-A- 19 943 696
- US-A- 4 681 366
- US-A- 5 267 775
- US-A- 5 529 265
- US-A- 5 713 633
- US-B1- 6 216 927

## Beschreibung

Die Erfindung betrifft einen Fahrzeugsitz mit einer an einer Rückenlehne lösbar befestigbaren Kopfstütze und mit einem integrierten Bildschirmgerät, für welches die Kopfstütze einen Aufnahmeraum aufweist.

Es ist bekannt, um Passagieren eines Kraftfahrzeugs die Möglichkeit zu bieten, sich während längerer Fahrten abzulenken bzw. sich zu beschäftigen oder zu informieren, im Bereich der Kopfstütze der Rückenlehne eines Fahrzeugsitzes ein Bildschirmgerät zu installieren. Bei dem Bildschirmgerät kann es sich dabei beispielsweise um einen TV-Empfänger, ein Videogerät oder um einen Computer handeln.

Bekannte Fahrzeugsitze, die diesen Zweck erfüllen, sind in den deutschen Gebrauchsmusteranmeldungen DE 295 18 369 U1 und DE 296 00 783 U1 sowie in der US 5,529,265 beschrieben. So ist aus dem Gebrauchsmuster DE 296 00 783 U1 eine Kopfstütze für Kraftfahrzeuge bekannt, bei der in einem Hohlraum Geräte aus dem Bereich der Unterhaltung integriert sein können. Bei einem Fahrzeugsitz mit der beschriebenen Kopfstütze handelt es sich um einen solchen der eingangs beschriebenen Art.

Bei der Kopfstütze für Fahrzeugsitze, die aus dem Gebrauchsmuster DE 295 18 369 U1 bekannt ist, ist an der Rückseite der Kopfstütze ein Bildschirm angeordnet, der in einem von der Kopfstütze abnehmbaren Formkörper mit einem Raum integriert ist, der für die Aufnahme der Kopfstütze bestimmt ist.

In der US 5,529,265 wird ein Fahrzeugsitz beschrieben, bei dem das integrierte Bildschirmgerät in einem Aufnahmeraum der Kopfstütze verschwenkbar gelagert ist, wobei jedoch die Kopfstütze nicht lösbar an der Rückenlehne des Sitzes befestigt ist, sondern mit dieser eine bauliche Einheit bildet.

Aus der US 4 681 366 ist ein Fahrzeugsitz mit einem Bildschirmgerät bekannt, das test in diesen Rückenlehne angeordnet ist.

Der Erfindung liegt die Aufgabe zugrunde, einen Fahrzeugsitz mit integriertem Bildschirmgerät der eingangs beschriebenen Art mit konstruktiv einfachen Mitteln derart zu gestalten, daß sich seine Montagefreundlichkeit bei Gewährleistung eines maximalen Komforts und einer hohen Sicherheit für die Passagiere des Fahrzeugs verbessert.

Diese Aufgabe wird durch einen Fahrzeugsitz nach Patentanspruch 1 gelöst.

Der Fahrzeugsitz ist somit vorteilhafterweise durch einen modularen Aufbau von Kopfstütze, Bildschirmgerät und Rückenlehne sehr montagefreundlich. Die formund/oder kraftschlüssige Verbindung, bei der es sich insbesondere um eine Klemmverbindung handeln kann, kann dabei ausreichend sicher gestaltet werden und bedarfsweise noch zusätzlich sichernd unterstützt werden, ohne daß die Montagefreundlichkeit dadurch negativ beeinträchtigt würde.

Vorzugsweise ist zumindest der Bildschirm des Bildschirmgerätes um eine im oberen Bereich der Rückenlehne in Querrichtung des Sitzes verlaufende Achse verschwenkbar und - alternativ oder zusätzlich um eine (weitere) in Querrichtung des Sitzes verlaufende Mittenachse verdrehbar. Durch die auf diese Weise mögliche Einstellung bestimmter Bildschirmpositionen kann der Sicherheitsstandard erhöht und der Komfort des erfindungsgemäßen Fahrzeugsitzes verbessert werden.

In der Regel wird in Kraftfahrzeugen die Kopfstütze eines Fahrzeugsitzes mit zwei Haltestangen höhenverschiebbar in Führungshülsen geführt, die mit dem Rahmen der Rückenlehne des Fahrzeugsitzes verbunden sind. Zur lösbaren Befestigung der Bildschirmeinrichtung kann in bevorzugter Ausführung der Erfindung eine durch eine Brücke gebildete einstückige Zusammenfassung der beiden Führungshülsen (als Auflageteil für das Bildschirmgerät) eine Aufnahmeöffnung aufweisen, die derart gestaltet ist, daß sie einen handelsüblichen Stecker für eine elektrische Verbindung aufnehmen kann. Die Kontakte des Steckers können mit den für den Betrieb der Bildschirmeinrichtung erforderlichen Versorgungsleitungen belegt werden. Das gesamte Kabelbündel der Anschlußleitungen kann so vorteilhafterweise - unsichtbar für die Passagiere - in der Rückenlehne verlegt und zu den entsprechenden Versorgungseinrichtungen geführt werden. Gleichzeitig mit dem Aufsetzen des Bildschirmgerätes auf das Auflageteil kommt dabei die erforderliche elektrische Verbindung zustande.

Der Bildschirm, der vorzugsweise in LCD-Technik ausgeführt sein kann, kann mit Vorteil auf einem insbesondere flachen Bodenteil (Konsole) angeordnet sein, das zusätzlich Durchgangslöcher für die Durchführung der Haltestangen der Kopfstütze aufweist. Damit wird eine zusätzliche formschlüssige Fixierung der Bildschirmeinrichtung erreicht, die auf diese Weise ohne das Entfernen der Kopfstütze nicht aus ihrer Haltevorrichtung entnommen werden kann.

Der Aufnahmeraum der Kopfstütze für das Bildschirmgerät kann mit Vorteil als eine zweiseitig (bodenseitig und in Blickrichtung der Betrachter des Bildschirmgerätes) offene Aussparung ausgebildet sein, die die Bildschirmeinrichtung vollständig umfaßt, so daß noch ein umfassender Aufprallschutz für die vor dem Bildschirmgerät sitzenden Passagiere gegeben ist. Selbst dann, wenn die Kopfstütze zur Anpassung in ihrer Höhe verstellt werden muß, kann noch ein ausreichender Schutz der Passagiere gewährleistet werden.

Weitere vorteilhafte Ausführungen der Erfindung sind in den Unteransprüchen und der nachfolgenden speziellen Beschreibung enthalten.

Anhand zweier in der beiliegenden Zeichnung dargestellter Ausführungsbeispiele wird die Erfindung näher erläutert. Dabei zeigen:
- Fig. 1: in perspektivischer Explosionsdarstellung, die wesentlichsten Teile einer ersten Ausführung eines erfindungsgemäßen Fahrzeugsitzes,
- Fig. 2: in schematisierter Seitenansicht, einen Teil einer zweiten Ausführung eines erfindungsgemäßen Fahrzeugsitzes,
- Fig. 3 und 4: in perspektivischer Darstellung, in zwei verschiedenen Positionen die zweite Ausführung eines nicht erfindungsgemäßen Fahrzeugsitzes,
- Fig. 5: in perspektivischer Explosionsdarstellung, die wesentlichsten Teile eines Bildschirmgerätes der zweiten Ausführung eines nicht erfindungsgemäßen Fahrzeugsitzes.

In den verschiedenen Figuren der Zeichnung sind gleiche Teile stets mit den gleichen Bezugszeichen versehen, so daß sie in der Regel auch jeweils nur einmal beschrieben werden.

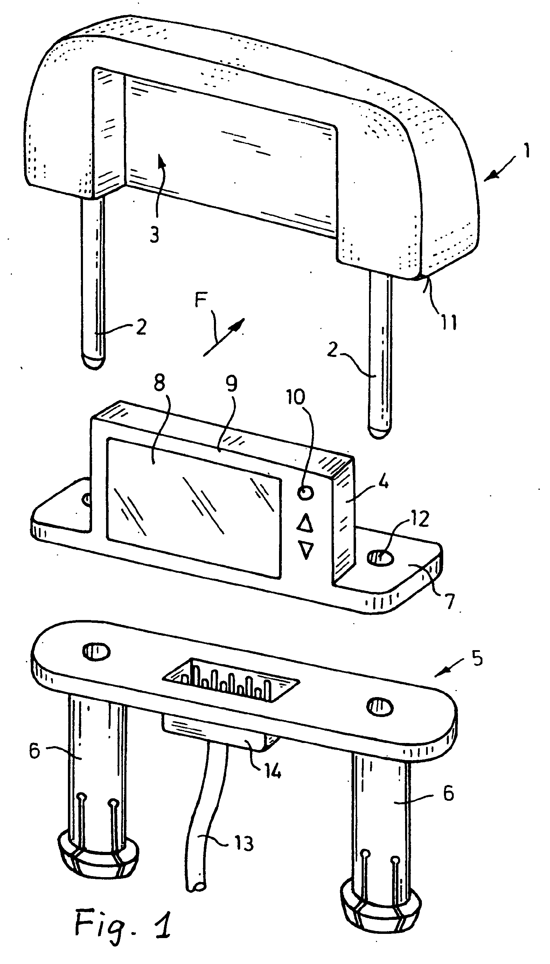

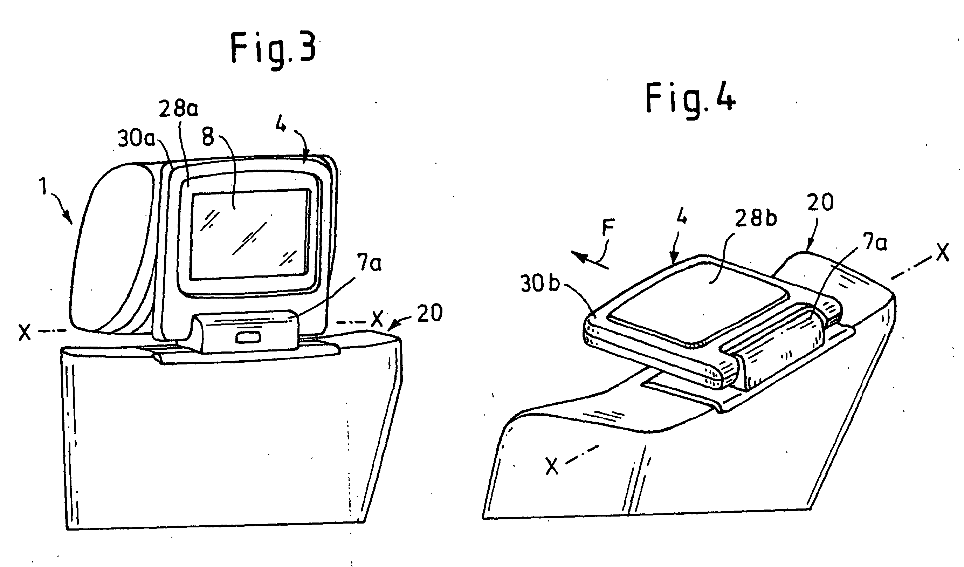

Wie zunächst aus der zeichnerischen Darstellung in Fig. 1 für die erste Ausführung, aber auch aus Fig. 3 für die zweite Ausführung hervorgeht, weist ein erfindungsgemäßer Fahrzeugsitz eine Kopfstütze 1 auf, die an einer (in Fig. 3 und 4 dargestellten) Rückenlehne 20 lösbar befestigbar ist. Zu diesem Zweck sind in an sich bekannter Weise an der Kopfstütze 1 unterseitig Haltestangen 2 befestigt.

Die Kopfstütze 1 weist einen Aufnahmeraum 3 für ein in den erfindungsgemäßen Fahrzeugsitz integriertes Bildschirmgerät 4 auf. Bei der Montage kann dieses Bildschirmgerät 4 in dem Aufnahmeraum 3 klemmend (kraftschlüssig) zwischen der Kopfstütze 1 und der Rückenlehne 20 befestigt werden. Der Aufnahmeraum 3 ist dabei mit Vorteil durch eine Aussparung in der Kopfstütze 1 gebildet, die das Bildschirmgerät 4 im Montagezustand formschlüssig umfaßt und die frontseitig, in Richtung auf einen Betrachter des Bildschirmgerätes 4 hin, sowie nach unten, in Richtung auf die Rückenlehne 20 hin, offen ist.

Der Rückenlehne 20 zugehörig ist in der in Fig. 1 dargestellten Ausführung ein in einem oberen Teil der Rückenlehne 20 angeordnetes Auflageteil 5 für das Bildschirmgerät 4. In der Rückenlehne 20 sind in an sich bekannter Art Befestigungshülsen 6 zur Verbindung der Rückenlehne 20 mit der Kopfstütze 1 angeordnet, die im Montagezustand von den Haltestangen 2 der Kopfstütze 1 durchgriffen werden. Die Befestigungshülsen 6 sind über das Auflageteil 5 für das Bildschirmgerät 4 miteinander brückenartig verbunden bzw, einstückig mit dem Auflageteil 5 ausgeführt. Das Auflageteil 5 mit den Hülsen 6 kann dabei mit Vorteil in einer Vertiefung der Rückenlehne 20 derart angeordnet sein, daß es mit der Oberseite der Rückenlehne 20, z.B. einer Polsterfläche der Lehne, bündig abschließt oder geringfügig darüber übersteht.

Das Bildschirmgerät 4 weist ein flaches Bodenteil 7 auf, auf dem in senkrechter Richtung nach oben abstehend der Bildschirm 8 angeordnet ist. Dieser kann dabei in bekannter Art und Weise von einem Gehäuse 9 umgeben sein, in dem sich eine geeignete Tastatur 10 zur Bedienung des Bildschirmgerätes 4 befindet. In vorteilhafter Ausführung kann es sich bei dem Bildschirm 8 um einen Flachbildschirm, insbesondere um einen LCD-Bildschirm, handeln.

Für die Ausbildung einer optimalen kraftschlüssigen (Klemm-)verbindung des Bildschirmgerätes 4 zwischen der Kopfstütze 1 und der Rückenlehne 20 des erfindungsgemäßen Sitzes ist es hierbei von Vorteil, wenn der Grundriß des Bodenteiles 7 größer ist als der Grundriß des Bildschirms 8 (einschließlich des Grundrisses seines Gehäuses 9) und vorzugsweise diesen Grundriß umfaßt. Des weiteren ist es unter diesem Aspekt vorteilhaft, wenn der Grundriß des Bodenteiles 7 etwa dem Grundriß des Auflageteils 5 im oberen Teil der Rückenlehne sowie etwa dem Grundriß einer Bodenfläche 11 der Kopfstütze 1 entspricht. Bei dieser Grundrißausbildung kommt es vorteilhafterweise zu einer eine optimale Klemmung unterstützenden großflächigen Anlage von der Kopfstütze 1 an dem Bodenteil 7 und von dem Bodenteil 7 an dem Auflageteil 5.

Wie bereits erwähnt, können in besonders vorteilhafter Ausbildung der Erfindung in dem Bodenteil 7 Durchtrittsöffnungen 12 für die Haltestangen 2 der Kopfstütze 1 angeordnet sein, wodurch beim Durchgriff der Haltestangen 2 durch diese Öffnungen 12 eine zusätzliche formschlüssige Fixierung der Bildschirmeinrichtung 4 erreicht wird. Dadurch wird die beschriebene Klemmverbindung zusätzlich unterstützt und die Sicherheit erhöht, da die Bildschirmeinrichtung 4 ohne das Entfernen der Kopfstütze 1 nicht mehr aus dem Fahrzeugsitz entnommen werden kann.

Was den elektrischen Anschluß oder z.B. auch den Antennenanschluß des Bildschirmgerätes 4 betrifft, so kann in das Auflageteil 5 für das Bildschirmgerät 4 ein mit Anschlußleitungen 13 verbundenes Steckeranschlußteil 14 zur elektrischen Verbindung mit einem korrespondierenden, insbesondere im Boden des Bildschirmgerätes 4 angeordneten (nicht dargestellten) Steckerteil des Bildschirmgerätes 4 integriert sein. Die Anschlußleitungen 13 des Steckeranschlußteils 14 können dabei bevorzugt innerhalb der Rückenlehne 20 verlegt sein.

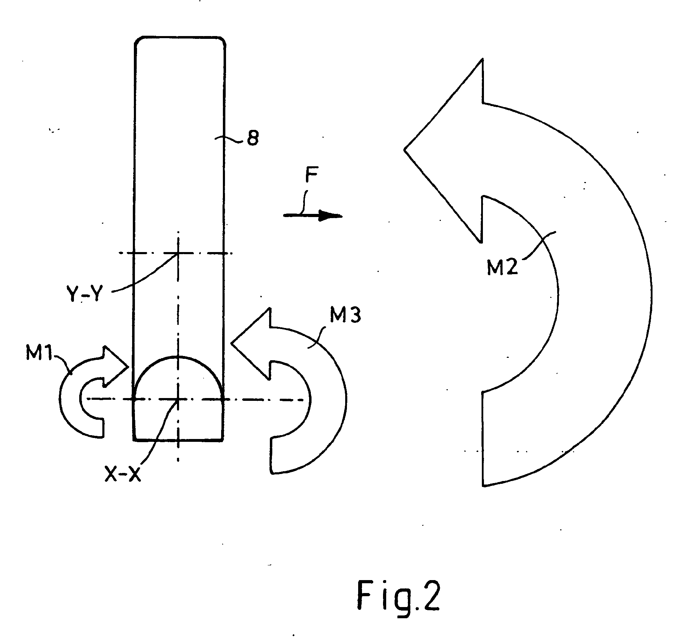

Die durch die Fig. 2 bis 5 veranschaulichte zweite Ausführung eines Fahrzeugsitzes unterscheidet sich von der ersten Ausführung insbesondere dadurch, daß zumindest der Bildschirm 8 des Bildschirmgerätes 4 um eine im oberen Bereich der Rückenlehne 20 in Querrichtung des Sitzes verlaufende Achse X-X verschwenkbar ist.

Dabei kann insbesondere vorgesehen sein, daß der Bildschirm 8 bei Aufbringung eines ersten Drehmomentes nach hinten, d.h. in der Regel bei entsprechend im Kraftfahrzeug eingebautem Sitz entgegen der Fahrtrichtung F, verschwenkbar ist. Dies wird durch den mit M1 bezeichneten Pfeil in Fig. 2 angedeutet. Das dargestellte Drehmoment M1 ist dabei ein federnd wirkendes Rückstellmoment, welches der Schwenkbewegung entgegenwirkt und den Bildschirm wieder in seine Ausgangslage bringt. Es kann dabei eine geringe Größe aufweisen. Eine solche Verschwenkbarkeit des Bildschirms 8 gestattet es, die Rückenlehne 20 des erfindungsgemäßen Kraftfahrzeugsitzes bei herausgenommener Kopfstütze 1 durch ein Nach-Vorn-Klappen in eine Tischposition zu bringen, wobei verhindert wird, daß der Bildschirm 8, wenn er dabei beispielsweise mit der Armaturentafel oder der Sonnenblende kollidiert, beschädigt wird.

Des weiteren kann vorgesehen sein, daß der Bildschirm 8 bei Aufbringung eines zweiten Drehmomentes um bis zu 90° nach vorn, d.h. in der Regel in die Fahrtrichtung F, verschwenkbar ist. Dies wird durch den mit M2 bezeichneten Pfeil in Fig. 2 angedeutet, der den Widerstand gegen diese Schwenkbewegung symbolisiert. Wenn das entsprechende Drehmoment, das etwa acht bis zehnmal so groß wie das erste Drehmoment sein kann, überschritten wird, klappt der Bildschirm (dauerhaft) um. Eine solche Verschwenkbarkeit des Bildschirms 8 stellt einen Mißbrauchschutz dar. Durch das ausweichende Verschwenken des Bildschirms 8 und gegebenenfalls weiterer damit verbundener Teile bei einer hohen mechanischen Belastung wird dabei verhindert, daß der Bildschirm 8 oder andere Teile des Bildschirmgerätes 4 zu Bruch gehen, wenn sich beispielsweise ein Passagier beim Aussteigen versehentlich am Bildschirm 8 abstützt. Die durch den Bildschirm 8 eingenommene, verschwenkte Position bei herausgenommener Kopfstütze 1, die auch als "Missuse Position" bezeichnet werden könnte, ist in Fig. 4 dargestellt.

Schließlich kann vorgesehen sein, daß der Bildschirm 8, insbesondere bei Aufbringung eines dritten Drehmomentes bei einem schlagartigen Wirksamwerden starker Beschleunigungskräfte, wie sie bei einem Heckaufprall auf das Fahrzeug auftreten, geringfügig (weniger als 90°) in die Fahrtrichtung F verschwenkbar ist. Dies wird durch den mit M3 bezeichneten Pfeil in Fig. 2 angedeutet, welcher ein dämpfendes Widerstands(dreh)moment gegen gegen das Verschwenken veranschaulicht. Das entsprechende Drehmoment kann dabei bevorzugt größer als das erste Drehmoment M1 (z.B. doppelt so groß) , jedoch geringer als das zweite Drehmoment M2 sein, wie dies durch die unterschiedlichen Größen und Dicken der Pfeile in Fig. 2 angedeutet ist. Dies stellt eine Sicherheitsmaßnahme für den Crashfall dar.

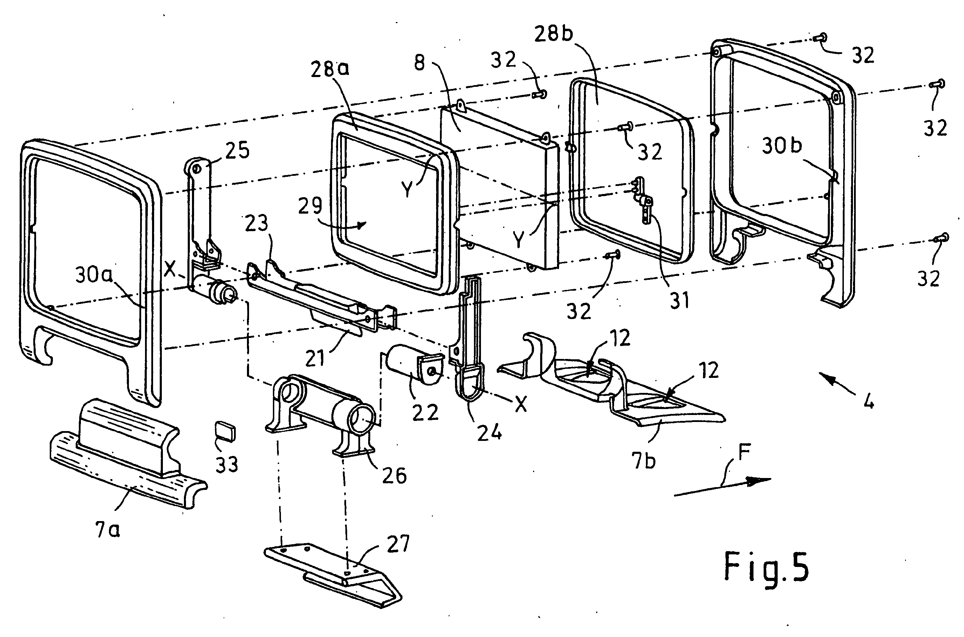

Um den Bewegungsablauf beim Verschwenken des Bildschirms 8, insbesondere die die Schwenkbewegung auslösenden und hemmenden Kräfte bzw. Drehmomente M1, M2, M3 zu bestimmen, kann in das Bildschirmgerät 4 eine Einrichtung integriert sein, die bevorzugt mindestens ein Federglied und ein Dämpferglied umfaßt. So sind in Fig. 5 als Federglied eine Feder 21 und als Dämpferglied ein Dämpfer 22 vorgesehen, die im Montagezustand in entsprechenden zugeordneten Gehäuseteilen, einem Federgehäuseteil 23 und einem Dämpfergehäuseteil 24, liegen. Durch die Feder 21 wird dabei das Rückstellmoment M1 aufgebracht, während der Dämpfer 22, z.B. im Crashfall, einem Verschwenken des Bildschirms 8 unter Aufbringung des Momentes M3 entgegenwirkt. Das Federgehäuseteil 23 und das Dämpfergehäuseteil 24 bilden zusammen mit einem weiteren Gehäuseteil 25, das der Kabelführung dient, ein (als Ganzes nicht näher bezeichnetes) Rahmenteil für den Bildschirm 8, das über ein Basisteil 26 an einem Adapter 27 zur Verbindung mit einem oberen Teil der Rückenlehne 20 befestigt ist. Der Adapter könnte auch - wie das in Fig. 1 dargestellte Teil 5 - als Auflageteil für das Bildschirmgerät 4 bezeichnet werden.

Dem in Fig. 1 gezeigten flachen Bodenteil 7 der ersten Ausführung der Erfindung entsprechen in Fig. 5 die beiden Bodensegmente 7a, 7b, von denen das eine (7b) die Durchtrittsöffnungen 12 für die Haltestangen 2 der Kopfstütze 1 aufweist. Die Bodensegmente 7a, 7b umfassen im Montagezustand das mit dem Adapter 27 verbundene Basisteil 26 und decken den Adapter 27 ab.

Die vorstehend erwähnte, in Querrichtung des Sitzes verlaufende Achse X-X im oberen Bereich der Rückenlehne 20, um die der Bildschirm 8 des Bildschirmgerätes 4 verschwenkbar ist, ist aufgrund der Explosionsdarstellung in Fig. 5 gekröpft dargestellt. Sie verläuft im Montagezustand in gerader Linie, beginnend in einem unteren Ende des Gehäuseteiles 25 zur Kabelführung, sich durch das Basisteil 26 und den Dämpfer 22 fortsetzend und im Dämpfergehäuseteil 24 endend.

Das Federgehäuseteil 23 ist im Montagezustand parallel zu der Schwenkachse X-X angeordnet, wobei die darin angeordnete Feder 21 bevorzugt als Blattfeder ausgebildet sein und in das Basisteil 26 eingreifen kann.

Fig. 5 zeigt des weiteren, daß vorteilhafterweise auf dem Bildschirm 8 des Bildschirmgerätes 4 mindestens ein Abdeckteil, vorzugsweise aber - wie dargestellt - ein (hinsichtlich der Fahrtrichtung F) vorderes Abdeckteil 28b und ein hinteres Abdeckteil 28a, befestigbar sein kann. Die Abdeckteile 28a, 28b sind, um den Bildschirm 8 umfassen zu können, halbschalenartig ausgebildet. Das hintere Abdeckteil 28a weist dabei ein Fenster 29 auf, durch das der Bildschirm 8 sichtbar ist. Das vordere Abdeckteil 28b besitzt kein Fenster, sondern deckt die Bildschirmrückwand im Montagezustand schützend ab.

Im Montagezustand ist der Bildschirm 8 zwischen den beiden Abdeckteilen 28a, 28b angeordnet und mitsamt diesen Teilen in einem vorzugsweise mehrteiligen Rahmen gehalten, der dem in Fig. 1 dargestellten Gehäuse 9 der ersten Ausführung der Erfindung entspricht. Dieser (als Ganzes nicht näher bezeichnete) Rahmen umfaßt ein (hinsichtlich der Fahrtrichtung F) vorderes Rahmenteil 30b und ein hinteres Rahmenteil 30a.

Eine weitere Besonderheit der zweiten Ausführung des erfindungsgemäßen Fahrzeugsitzes besteht nun darin, daß der Bildschirm 8 (einschließlich seiner beiden Abdeckteile 28a, 28b) um eine weitere, in Querrichtung des Sitzes verlaufende, insbesondere in dem Rahmen gehaltene, Mittenachse Y-Y verdrehbar gelagert ist. Dies ermöglicht es, den Bildschirm 8 mit den Abdeckteilen 28a, 28b, bevor eventuell der Bildschirm 8 bei herausgenommener Kopfstütze 1 nach vorn verschwenkt wird, diesen in eine geschützte Lage zu bringen, in der das ursprünglich vordere (fensterlose) Abdeckteil 28a entgegen der Fahrtrichtung F, - bzw. nach dem Verschwenken des Bildschirms 8 (einschließlich der Rahmenteile 30a, 30b) um etwa 90° - nach oben weist. Diese Nichtgebrauchs-Position des Bildschirmgerätes 4 ist in Fig. 4 dargestellt.

Die Nichtgebrauchs-Position des Bildschirmgerätes 4 kann auch eingestellt werden, wenn kein Klappen der Rückenlehne 20 erfolgen soll. So kann beispielsweise - ausgehend von der in Fig. 3 dargestellten Gebrauchsposition - zuerst die Kopfstütze 1 entfernt werden, dann der Bildschirm 8 mit den beiden Abdeckteilen 28a, 28b um die in Querrichtung des Sitzes verlaufende Mittenachse Y-Y um 180° gedreht werden, und dann die Kopfstütze wieder aufgesetzt werden, so daß wiederum eine Position ähnlich wie in Fig. 3 erreicht wird, nur mit dem Unterschied, daß der Bildchirm 8 durch das vordere Abdeckteil 28b geschützt ist.

Die Lagerung des Bildschirms 8 in den Rahmenteilen 30a, 30b, die eine Verdrehung um bis zu 180° gestattet, ermöglicht es vorteilhafterweise außerdem, in der in Fig. 3 dargestellten Gebrauchsposition des Bildschirmgerätes 4 bei einem kleineren Verdrehwinkel eine individuelle Anpassung des Bildschirms 8 an die Bedürfnisse eines Betrachters vorzunehmen, indem durch eine entsprechende Drehung ein optimaler Betrachtungswinkel stufenlos eingestellt werden kann. Damit aus diesem Winkel heraus bei der Fahrt kein selbständiges Zurück- oder Weiterdrehen des Bildschirms 8 erfolgt, kann zur Arretierung ein Bremsmechanismus 31 vorgesehen sein, wie dies Fig. 5 zeigt.

Im Gegensatz zum Bildschirm 8 und seinen Abdeckteilen 28a, 28b werden das Federgehäuseteil 23, das Dämpfergehäuseteil 24 und das Gehäuseteil 25, das der Kabelführung dient, die ja wie bereits erwähnt, ebenfalls ein Rahmenteil bilden, fest (unverdrehbar) - insbesondere in Zwischenlage - mit dem vorderen Rahmenteil 30b und dem hinteren Rahmenteil 30b verbunden. Wie die Montage, beispielsweise eine Befestigung mit Schrauben 32 erfolgen kann, wird dabei in Fig. 5 durch die unbezeichneten strichpunktierten Linien verdeutlicht.

Die Erfindung ist nicht auf die dargestellten Ausführungsbeispiele beschränkt, sondern umfaßt auch alle im Sinne der Erfindung gleichwirkenden Ausführungen. So können insbesondere Formgebung und Dimensionierung der beschriebenen Teile von den dargestellten Ausführungen abweichen. Oder es können beispielsweise die jeweils eben dargestellten Ober- und Unterseiten des Bodenteils 7, der Kopfstütze 1 und des Auflageteils 5 mit einander formschlüssig entsprechenden Konturierungen versehen sein, wodurch eine Relativbewegung dieser Teile gegeneinander verhindert wird.

Außerdem kann der Fachmann weitere Maßnahmen zur technischen Ausgestaltung eines erfindungsgemäßen Fahrzeugsitzes vorsehen, ohne daß der Rahmen der Erfindung verlassen wird. So ist es beispielsweise möglich, daß für das Bildschirmgerät 4 auch eine Infrarot-Fernsteuerung vorgesehen ist, was durch das in Fig. 5 dargestellte Infrarot-Fenster 33 veranschaulicht wird.

Anstelle der in Fig. 5 dargestellten Lagerstelle des Bremsmechanismus 31 kann auch vorgesehen sein, daß der Bildschirm 8 in seitlich (rechts und links des dargestellten Bremsmechanismus 31) in seinem Rahmen über insbesondere im hinteren Abdeckteil 28 befindliche Kugelgelenke gelagert und damit an unterschiedliche Betrachtungsrichtungen angepaßt werden könnte, wobei bei einem auch dadurch möglichen Verschwenken um eine vertikale Achse jeweils das eine oder andere der beiden Kugelgelenke ausgerastet werden müßte.

### Bezugszeichen

- 1: Kopfstütze
- 2: Haltestange von 1
- 3: Aufnahmeraum von 1 für 4
- 4: Bildschirmgerät
- 5: Auflageteil für 4
- 6: Befestigungshülsen für 2
- 7: Bodenteil von 4
- 7a, 7b: Bodensegmente
- 8: Bildschirm von 4
- 9: Gehäuse von 4
- 10: Tastatur von 4
- 11: Bodenfläche von 1
- 12: Durchtrittsöffnungen für 2 in 7, 7b
- 13: Anschlußleitung
- 14: Steckeranschlußteil in 5

- 20: Rückenlehne
- 21: Feder
- 22: Dämpfer
- 23: Federgehäuseteil
- 24: Dämpfergehäuseteil
- 25: Gehäuseteil zur Kabelführung
- 26: Basisteil
- 27: Adapter
- 28a: hinteres Abdeckteil für 8
- 28b: vorderes Abdeckteil für 8
- 29: Fenster in 28a
- 30a: hinteres Rahmenteil
- 30b: vorderes Rahmenteil
- 31: Bremsmechanismus
- 32: Schrauben

- F: Fahrtrichtung
- M1: Drehmoment
- M2: Drehmoment
- M3: Drehmoment
- X-X: Schwenkachse für 8
- Y-Y: Drehachse von 8

## Patentansprüche

1. Fahrzeugsitz mit einer an einer Rückenlehne (20) lösbar befestigbaren Kopfstütze (1) und mit einem integrierbaren Bildschirmgerät (4), für welches die Kopfstütze (1) einen Aufnahmeraum (3) aufweist, **dadurch gekennzeichnet, dass** das Bildschirmgerät (4) im Montagezustand von dem Aufnahmeraum (3) formschlüssig umfast ist, und welcher frontseitig, in Richtung auf den Betrachter des Bildschirms hin, sowie nach unten, in Richtung auf die Rückenlehne (20) offen ist, sowie kraftschlüssig zwischen der Kopfstütze (1) und der Rückenlehne (20) befestigt ist.

2. Fahrzeugsitz nach Anspruch 1, **dadurch gekennzeichnet, dass** in einem oberen Teil der Rückenlehne (20) ein Auflageteil (5, 27) für das Bildschirmgerät (4) angeordnet ist.

3. Fahrzeugsitz nach Anspruch 1 oder 2, **dadurch gekennzeichnet, dass** das Bildschirmgerät (4) mindestens ein insbesondere flaches Bodenteil (7, 7a, 7b) aufweist, von dem in senkrechter Richtung abstehend der Bildschirm (8) angeordnet ist.

4. Fahrzeugsitz nach Anspruch 3, **dadurch gekennzeichnet, dass** der Grundriss des Bodenteils (7) größer ist als der Grundriss des Bildschirms (8) und vorzugsweise den Grundriss des Bildschirms (8) umfasst.

5. Fahrzeugsitz nach Anspruch 3 oder 4, **dadurch gekennzeichnet, dass** der Grundriss des Bodenteils (7) etwa dem Grundriss eines/des Auflageteils (5) im oberen Teil der Rückenlehne (20) entspricht.

6. Fahrzeugsitz nach einem der Ansprüche 3 bis 5, **dadurch gekennzeichnet, dass** der Grundriss des Bodenteils (7) etwa dem Grundriss einer Bodenfläche (11) der Kopfstütze (1) entspricht.

7. Fahrzeugsitz nach einem der Ansprüche 1 bis 5, **dadurch gekennzeichnet, dass** an der Kopfstütze (1) unterseitig Haltestangen (2) zur Verbindung der Kopfstütze (1) mit der Rückenlehne (20) befestigt sind.

8. Fahrzeugsitz nach einem der Ansprüche 1 bis 6, **dadurch gekennzeichnet, dass** in der Rückenlehne (20) Befestigungshülsen (6) zur Verbindung der Rückenlehne (20) mit der Kopfstütze (1) angeordnet sind.

9. Fahrzeugsitz nach Anspruch 8, **dadurch gekennzeichnet, dass** die Befestigungshülsen (6) über ein/das Auflageteil (5) für das Bildschirmgerät (4) miteinander brückenartig verbunden sind.

10. Fahrzeugsitz nach einem der Ansprüche 3 bis 9, **dadurch gekennzeichnet, dass** in dem Bodenteil (7, 7b) Durchtrittsöffnungen (12) für (die) Haltestangen (2) der Kopfstütze (1) angeordnet sind.

11. Fahrzeugsitz nach einem der Ansprüche 3 bis 9, **dadurch gekennzeichnet, dass** in das Auflageteil (5) für das Bildschirmgerät (4) ein mit Anschlussleitungen (13) verbundenes Steckeranschlussteil (14) zur elektrischen Verbindung mit einem korrespondierenden, insbesondere im Boden des Bildschirmgeräts (4) angeordneten Steckerteil des Bildschirmgeräts (4) integriert ist.

12. Fahrzeugsitz nach Anspruch 11, **dadurch gekennzeichnet, dass** die Anschlussleitungen (13) des Steckeranschlussteils (14) innerhalb der Rückenlehne (20) verlegt sind.

13. Fahrzeugsitz nach einem der Ansprüche 1 bis 12, **dadurch gekennzeichnet, dass** der Bildschirm (8) des Bildschirmgeräts (4) als Flachbildschirm, insbesondere als LCD-Bildschirm ausgebildet ist.

14. Fahrzeugsitz nach einem der Ansprüche 1 bis 13, **dadurch gekennzeichnet, dass** der Aufnahmeraum (3) durch eine Aussparung in der Kopfstütze (1) gebildet ist, die im Montagezustand das Bildschirmgerät (4) formschlüssig umfasst und die frontseitig, in Richtung auf einen Betrachter des Bildschirmgeräts (4) hin, sowie nach unten, in Richtung auf die Rückenlehne (20) hin, offen ist.

15. Fahrzeugsitz nach einem der Ansprüche 1 bis 14, **dadurch gekennzeichnet, dass** zumindest der Bildschirm (8) des Bildschirmgeräts (4) um eine im oberen Bereich der Rückenlehne (20) in Querrichtung des Sitzes verlaufende Achse (X-X) verschwenkbar ist.

16. Fahrzeugsitz nach einem der Ansprüche 1 bis 15, **dadurch gekennzeichnet, dass** der Bildschirm (8), insbesondere bei Aufbringung eines ersten Drehmomentes (M1) entgegen der Wirkung eines Federgliedes nach hinten (entgegen der Fahrtrichtung (F)) verschwenkbar ist.

17. Fahrzeugsitz nach einem der Ansprüche 1 bis 16, **dadurch gekennzeichnet, dass** der Bildschirm (8), insbesondere bei Aufbringung eines zweiten Drehmomentes (M2) nach vom (in die Fahrtrichtung (F)) verschwenkbar ist.

18. Fahrzeugsitz nach einem der Ansprüche 1 bis 17, **dadurch gekennzeichnet, dass** der Bildschirm (8) bei Aufbringung eines dritten Drehmomentes (M3) und Wirksamwerden starker Beschleunigungskräfte, wie sie bei einem Heckaufprall auftreten, entgegen der Wirkung eines Dämpfergliedes nach vom (in die Fahrtrichtung (F)) verschwenkbar ist.

19. Fahrzeugsitz nach einem der Ansprüche 1 bis 18, **dadurch gekennzeichnet, dass** in das Bildschirmgerät (4) eine Einrichtung integriert ist, die bevorzugt mindestens ein Federglied (21) und ein Dämpferglied (22) umfasst und die den Bewegungsablauf beim Verschwenken des Bildschirms (8), insbesondere die die Schwenkbewegung auslösenden und hemmenden Kräfte bzw. Drehmomente (M1, M2, M3), bestimmt.

20. Fahrzeugsitz nach einem der Ansprüche 1 bis 15, **dadurch gekennzeichnet, dass** auf dem Bildschirm (8) des Bildschirmgeräts (4) mindestens ein Abdeckteil, vorzugsweise ein vorderes Abdeckteil (28b) und ein hinteres Abdeckteil (28a), befestigbar ist.

21. Fahrzeugsitz nach einem der Ansprüche 1 bis 20, **dadurch gekennzeichnet, dass** der Bildschirm (8) des Bildschirmgeräts (4) in einem insbesondere mehrteiligen Rahmen gehalten ist.

22. Fahrzeugsitz nach Anspruch 21, **dadurch gekennzeichnet, dass** der mehrteilige Rahmen ein vorderes Rahmenteil (30b) und ein hinteres Rahmenteil (30a) umfasst.

23. Fahrzeugsitz nach Anspruch 21 oder 22, **dadurch gekennzeichnet, dass** der mehrteilige Rahmen ein Federgehäuseteil (23), ein Dämpfergehäuseteil (24) und ein Gehäuseteil (25), das der Kabelführung dient, umfasst, die zu einem gemeinsamen Rahmenteil verbindbar und vorzugsweise in Zwischenlage zwischen dem vorderen Rahmenteil (30b) und dem hinteren Rahmenteil (30a) montierbar sind.

24. Fahrzeugsitz nach einem der Ansprüche 1 bis 23, **dadurch gekennzeichnet, dass** der Bildschirm (8), gegebenenfalls einschließlich seine(s)/(r) Abdeckteile(s) (28a, 28b), um eine in Querrichtung des Sitzes verlaufende, insbesondere in dem Rahmen gehaltene, Mittenachse (Y-Y) verdrehbar gelagert ist.

25. Fahrzeugsitz nach Anspruch 24, **dadurch gekennzeichnet, dass** der Bildschirm (8) um bis zu 180° um die in Querrichtung des Sitzes verlaufende Mittenachse (Y-Y) verdrehbar ist.

26. Fahrzeugsitz nach Anspruch 24 oder 25, **dadurch gekennzeichnet, dass** das Bildschirmgerät (4) einen Bremsmechanismus (31) enthält, der ein Zurück- oder Weiterdrehen des Bildschirms (8) verhindert.

27. Fahrzeugsitz nach einem der Ansprüche 1 bis 23, **dadurch gekennzeichnet, dass** der Bildschirm (8), insbesondere durch eine Lagerung in zwei in einem/dem Rahmen oder insbesondere einem/dem hinteren Abdeckteil (28b) angeordneten Kugelgelenken, sowohl um eine in Querrichtung des Sitzes verlaufende Achse, als auch um eine vertikal verlaufende Achse verdrehbar gelagert ist.

## Claims

1. Vehicle seat with a headrest (1) which can be detachably attached to a backrest (20), and having an integrated screen device (4) for which the headrest (1) has a receptacle space (3), **characterized in that** in the mounted state the screen device (4) is enclosed in a positively locking fashion by the receptacle space (3) which is open at the front in the direction of the viewer of the screen and downwards in the direction of the backrest (20), and is attached in a frictionally locking fashion between the headrest (1) and the backrest (20).

2. Vehicle seat according to Claim 1, **characterized in that** a support component (5, 27) for the screen device (4) is arranged in an upper component of the backrest (20).

3. Vehicle seat according to Claim 1 or 2, **characterized in that** the screen device (4) has at least one, in particular, flat base component (7, 7a, 7b), protruding from which in the perpendicular direction the screen (8) is arranged.

4. Vehicle seat according to Claim 3, **characterized in that** the outline of the base component (7) is
larger than the outline of the screen (8) and preferably encloses the outline of the screen (8).

5. Vehicle seat according to Claim 3 or 4, **characterized in that** the outline of the base component (7) corresponds approximately to the outline of a/the support component (5) in the upper component of the backrest (20).

6. Vehicle seat according to one of Claims 3 to 5, **characterized in that** the outline of the base component (7) corresponds approximately to the outline of a base surface (11) of the headrest (1).

7. Vehicle seat according to one of Claims 1 to 5, **characterized in that** securing rods (2) for connecting the headrest (1) to the backrest (20) are attached to the headrest (1) on the underside.

8. Vehicle seat according to one of Claims 1 to 6, **characterized in that** attachment sleeves (6) for connecting the backrest (20) to the headrest (1) are arranged in the backrest (20).

9. Vehicle seat according to Claim 8, **characterized in that** the attachment sleeves (6) are connected to one another in a bridge-like fashion via a/the support component (5) for the screen device (4).

10. Vehicle seat according to one of Claims 3 to 9, **characterized in that** through-openings (12) for (the) securing rods (2) of the headrest (1) are arranged in the base component (7, 7b).

11. Vehicle seat according to one of Claims 3 to 9, **characterized in that** a plug-connecting component (14) which is connected to connecting lines (13) and has the purpose of forming an electrical connection to a corresponding plug component of the screen device (4), which is, in particular, arranged in the base of the screen device (4), is integrated into the support component (5) for the screen device (4).

12. Vehicle seat according to Claim 11, **characterized in that** the connecting lines (13) of the plug-connecting component (14) are laid within the backrest (20).

13. Vehicle seat according to one of Claims 1 to 12, **characterized in that** the screen (8) of the screen device (4) is embodied as a flat screen, in particular as an LCD screen.

14. Vehicle seat according to one of Claims 1 to 13, **characterized in that** the receptacle space (3) is formed by a cutout in the headrest (1) which in the mounted state encloses the screen device (4) in a positively locking fashion and which is open at the front in the direction of a viewer of the screen device (4) and downwards in the direction of the backrest (20).

15. Vehicle seat according to one of Claims 1 to 14, **characterized in that** at least the screen (8) of the screen device (4) can be pivoted about an axis (X-X) running in the upper region of the backrest (20), in the transverse direction of the seat.

16. Vehicle seat according to one of Claims 1 to 15, **characterized in that** the screen (8) can be pivoted rearwards (counter to the direction of travel (F)), in particular when a first torque (M1) is applied counter to the effect of a spring element.

17. Vehicle seat according to one of Claims 1 to 16, **characterized in that** the screen (8) can be pivoted forwards (in the direction of travel (F)), in particular when a second torque (M2) is applied.

18. Vehicle seat according to one of Claims 1 to 17, **characterized in that** the screen (8) can be pivoted forwards (in the direction of travel (F)) when a third torque (M3) is applied counter to the effect of a damper element and strong acceleration forces, such as occur in the event of a rear-end impact, become effective.

19. Vehicle seat according to one of Claims 1 to 18, **characterized in that** a device, which preferably comprises at least one spring element (21) and one damper element (22) and which determines the movement sequence when the screen (8) is pivoted, in particular the forces and/or torques (M1, M2, M3) which trigger and inhibit the pivoting movement, is integrated into the screen device (4).

20. Vehicle seat according to one of Claims 1 to 15, **characterized in that** at least one cover component, preferably a front cover component (28b) and a rear cover component (28a), can be attached to the screen (8) of the screen device (4).

21. Vehicle seat according to one of Claims 1 to 20, **characterized in that** the screen (8) of the screen device (4) is secured in an, in particular, multi-component frame.

22. Vehicle seat according to Claim 21, **characterized in that** the multi-component frame comprises a front frame component (30b) and a rear frame component (30a).

23. Vehicle seat according to Claim 21 or 22, **characterized in that** the multi-component frame comprises a spring housing component (23), a damper housing component (24) and a housing component (25) which serves for guiding cables, which components (23, 24, 25) can be connected to form a common frame component and can preferably be mounted in an intermediate position between the front frame component (30b) and the rear frame component (30a).

24. Vehicle seat according to one of Claims 1 to 23, **characterized in that** the screen (8) is mounted, if appropriate including its cover component or components (28a, 28b), so as to be rotatable about a centre axis (Y-Y) which runs in the transverse direction of the seat and is secured, in particular, in the frame.

25. Vehicle seat according to Claim 24, **characterized in that** the screen (8) can be rotated by up to 180° about the centre axis (Y-Y) running in the transverse direction of the seat.

26. Vehicle seat according to Claim 24 or 25, **characterized in that** the screen device (4) contains a brake mechanism (31) which prevents the screen (8) from turning back or turning further.

27. Vehicle seat according to one of Claims 1 to 23, **characterized in that** the screen (8) is mounted so as to be rotatable both about an axis running in the transverse direction of the seat and about a vertically running axis, in particular by means of a bearing in two ball-and-socket joints which are
arranged in a/the frame or, in particular, a/the rear cover component (28b).

## Revendications

1. Siège de véhicule comportant un appui-tête (1) pouvant être fixé de manière amovible à un dossier (20) et comportant un appareil à écran (4) intégrable pour lequel l'appui-tête (1) comprend un espace de réception (3), **caractérisé en ce que** l'appareil à écran (4), dans l'état de montage, est entouré avec complémentarité de forme par l'espace de réception (3), ce dernier étant ouvert du côté avant, dans la direction de l'observateur de l'écran, ainsi que vers le bas, dans la direction du dossier (20), et est fixé à force entre l'appui-tête (1) et le dossier (20).

2. Siège de véhicule selon la revendication 1, **caractérisé en ce qu'**une partie d'appui (5, 27) pour l'appareil à écran (4) est disposée dans une partie supérieure du dossier (20).

3. Siège de véhicule selon la revendication 1 ou 2, **caractérisé en ce que** l'appareil à écran (4) comprend au moins une partie de base (7, 7a, 7b) en particulier plate, à partir de laquelle l'écran (8) est disposé de manière saillante dans la direction perpendiculaire.

4. Siège de véhicule selon la revendication 3, **caractérisé en ce que** la projection horizontale de la partie de base (7) est plus grande que la projection horizontale de l'écran (8) et de préférence contient la projection horizontale de l'écran (8).

5. Siège de véhicule selon la revendication 3 ou 4, **caractérisé en ce que** la projection horizontale de la partie de base (7) correspond approximativement à la projection horizontale d'une/de la partie d'appui (5) dans la partie supérieure du dossier (20).

6. Siège de véhicule selon l'une quelconque des revendications 3 à 5, **caractérisé en ce que** la projection horizontale de la partie de base (7) correspond approximativement à la projection horizontale d'une surface de base (11) de l'appui-tête (1).

7. Siège de véhicule selon l'une quelconque des revendications 1 à 5, **caractérisé en ce que** des barres de retenue (2) sont fixées sur l'appui-tête (1), du côté inférieur, pour la liaison de l'appui-tête (1) au dossier (20).

8. Siège de véhicule selon l'une quelconque des revendications 1 à 6, **caractérisé en ce que** des douilles de fixation (6) sont disposées dans le dossier (20) pour la liaison du dossier (20) à l'appui-tête (1).

9. Siège de véhicule selon la revendication 8, **caractérisé en ce que** les douilles de fixation (6) sont reliées l'une à l'autre à la manière d'un pont par l'intermédiaire d'une/de la partie d'appui (5) pour l'appareil à écran (4).

10. Siège de véhicule selon l'une quelconque des revendications 3 à 9, **caractérisé en ce que** des ouvertures de passage (12) pour des (les) barres de retenue (2) de l'appui-tête (1) sont prévues dans la partie de base (7, 7b).

11. Siège de véhicule selon l'une quelconque des revendications 3 à 9, **caractérisé en ce qu'**une partie de raccordement à fiche (14), connectée à des lignes de raccordement (13), pour la connexion électrique à une partie de fiche de l'appareil à écran (4) correspondante disposée en particulier dans la base de l'appareil à écran (4), est intégrée dans la partie d'appui (5) pour l'appareil à écran (4).

12. Siège de véhicule selon la revendication 11, **caractérisé en ce que** les lignes de raccordement (13) de la partie de raccordement à fiche (14) sont posées à l'intérieur du dossier (20).

13. Siège de véhicule selon l'une quelconque des revendications 1 à 12, **caractérisé en ce que** l'écran (8) de l'appareil à écran (4) est réalisé en tant qu'écran plat, en particulier en tant qu'écran LCD.

14. Siège de véhicule selon l'une quelconque des revendications 1 à 13, **caractérisé en ce que** l'espace de réception (3) est formé par un évidement dans l'appui-tête (1), lequel évidement entoure avec complémentarité de forme l'appareil à écran (4) dans l'état de montage et est ouvert du côté avant, dans la direction d'un observateur de l'appareil à écran (4), ainsi que vers le bas, dans la direction du dossier (20).

15. Siège de véhicule selon l'une quelconque des revendications 1 à 14, **caractérisé en ce qu'**au moins l'écran (8) de l'appareil à écran (4) peut être pivoté autour d'un axe (X-X) s'étendant dans la direction transversale du siège dans la zone supérieure du dossier (20).

16. Siège de véhicule selon l'une quelconque des revendications 1 à 15, **caractérisé en ce que** l'écran (8) peut être pivoté vers l'arrière (dans la direction contraire à la direction de conduite (F)) à l'encontre de l'action d'un organe ressort, en particulier lors de l'application d'un premier couple (M1).

17. Siège de véhicule selon l'une quelconque des revendications 1 à 16, **caractérisé en ce que** l'écran (8) peut être pivoté vers l'avant (dans la direction de conduite (F)), en particulier lors de l'application d'un deuxième couple (M2).

18. Siège de véhicule selon l'une quelconque des revendications 1 à 17, **caractérisé en ce que** l'écran (8) peut être pivoté vers l'avant (dans la direction de conduite (F)) à l'encontre de l'action d'un organe amortisseur, lors de l'application d'un troisième couple (M3) et de l'entrée en action de fortes forces d'accélération, telles qu'elles surviennent en cas de choc arrière.

19. Siège de véhicule selon l'une quelconque des revendications 1 à 18, **caractérisé en ce qu'**un dispositif est intégré dans l'appareil à écran (4), lequel dispositif comporte de préférence au moins un organe ressort (21) et un organe amortisseur (22) et détermine le déroulement du mouvement lors du pivotement de l'écran (8), en particulier les forces ou couples (M1, M2, M3) déclenchant et entravant le mouvement de pivotement.

20. Siège de véhicule selon l'une quelconque des revendications 1 à 15, **caractérisé en ce qu'**au moins une partie de recouvrement, de préférence une partie de recouvrement avant (28b) et une partie de recouvrement arrière (28a), peuvent être fixées sur l'écran (8) de l'appareil à écran (4).

21. Siège de véhicule selon l'une quelconque des revendications 1 à 20, **caractérisé en ce que** l'écran (8) de l'appareil à écran (4) est maintenu dans un cadre en particulier en plusieurs parties.

22. Siège de véhicule selon la revendication 21, **caractérisé en ce que** le cadre en plusieurs parties comporte une partie de cadre avant (30b) et une partie de cadre arrière (30a).

23. Siège de véhicule selon la revendication 21 ou 22, **caractérisé en ce que** le cadre en plusieurs parties comporte une partie de boîtier de ressort (23), une partie de boîtier d'amortisseur (24) et une partie de boîtier (25) qui sert au guidage de câble, lesquelles peuvent être reliées à une partie de cadre commune et peuvent être montées de préférence de manière intercalée entre la partie de cadre avant (30b) et la partie de cadre arrière (30a).

24. Siège de véhicule selon l'une quelconque des revendications 1 à 23, **caractérisé en ce que** l'écran (8), éventuellement y compris sa/ses partie(s) de recouvrement (28a, 28b), est monté rotatif autour d'un axe médian (Y-Y) s'étendant dans la direction transversale du siège, en particulier maintenu dans le cadre.

25. Siège de véhicule selon la revendication 24, **caractérisé en ce que** l'écran (8) peut être tourné de jusqu'à 180° autour de l'axe médian (Y-Y)
s'étendant dans la direction transversale du siège.

26. Siège de véhicule selon la revendication 24 ou 25, **caractérisé en ce que** l'appareil à écran (4) contient un mécanisme de freinage (31) qui empêche une rotation en arrière ou une poursuite de la rotation de l'écran (8).

27. Siège de véhicule selon l'une quelconque des revendications 1 à 23, **caractérisé en ce que** l'écran (8) est monté rotatif tant autour d'un axe s'étendant dans la direction transversale du siège qu'autour d'un axe s'étendant verticalement, en particulier grâce à un montage dans deux articulations à rotule disposées dans un/le cadre ou en particulier dans une/la partie de recouvrement arrière (28b).
